# EUROPÄISCHE PATENTSCHRIFT

(11) **EP 1 663 683 B1**
(45) Veröffentlichungstag und Bekanntmachung des Hinweises auf die Patenterteilung: **15.10.2008**
(21) Anmeldenummer: 04764658.3
(22) Anmeldetag: 31.08.2004
(51) Int. Cl.: B60J 5/04

(54) **VORRICHTUNG UND VERFAHREN ZUR ERHÖHUNG DES INSASSENSCHUTZES IN EINEM FAHRZEUG BEI EINEM SEITENAUFPRALL**
DEVICE AND METHOD FOR INCREASING OCCUPANT PROTECTION IN A VEHICLE DURING A SIDE IMPACT
DISPOSITIF ET PROCEDE D'AUGMENTATION DU NIVEAU DE PROTECTION DES OCCUPANTS D'UN VEHICULE EN CAS DE CHOC LATERAL

(30) Priorität: 08.09.2003 DE 10341329
(43) Veröffentlichungstag der Anmeldung: 07.06.2006
(73) Patentinhaber: Fraunhofer-Gesellschaft zur Förderung der angewandten Forschung e.V., 80686 München (DE); Faurecia Innenraum Systeme GmbH, 76767 Hagenbach (DE)
(72) Erfinder: MELZ, Tobias, 64285 Darmstadt (DE); MATTHIAS, Michael, 64287 Darmstadt (DE); BEIN, Thilo, 64295 Darmstadt (DE); ZIMMERMAN, Eric, 34125 Kassel (DE)
(74) Vertreter: Rösler, Uwe
(86) Internationale Anmeldenummer: PCT/EP2004/009693
(87) Internationale Veröffentlichungsnummer: WO 2005/025907

(56) Entgegenhaltungen:
- DE-A- 10 128 864
- DE-A- 19 514 191
- DE-A- 19 828 444
- DE-A- 19 832 076
- DE-A- 19 963 068
- US-A- 6 053 565

## Beschreibung

### Technisches Gebiet

Die Erfindung bezieht sich auf eine Vorrichtung für ein Kraftfahrzeug zum Insassenschutz beim Seitenaufprall oder bei einer dem Seitenaufprall ähnlichen Kollision, bei der ein Energieeintrag im wesentlichen seitlich auf einen Türbereich des Kraftfahrzeuges einwirkt, mit wenigstens einer die Kraftfahrzeugtür gegen einen im wesentlichen seitlich auf die Kraftfahrzeugtür einwirkenden Energieeintrag stabilisierenden Einheit, die wenigstens einen die Kraftfahrzeugtür innenliegend durchragenden Seitenaufprallträger vorsieht, der im Kollisionsfall mit wenigstens zwei Abstützbereichen innerhalb die Kraftfahrzeugtür umgebenden stabilen Karosseriebereichen in Wirkverbindung tritt. Darüber hinaus wird ein Verfahren zur Erhöhung des Insassenschutzes in einem Fahrzeug bei einer Seitenaufprallsituation beschrieben.

### Stand der Technik

Der Insassenschutz bei Kraftfahrzeugen gilt als eines der Hauptaufgaben bei der Konstruktion und Neuentwicklung von Kraftfahrzeugen. Ein eigenes Entwicklungsziel dient der Auslegung ausgeprägter Knautschzonen im Front- und Heckbereich, die die Fahrgastzelle bei Front- und Heckkollisionen weitgehend sicher zu schützen vermögen. Bei seitlichen Kollisionen hingegen bereitet der Insassenschutz aufgrund der kleinen zur Verfügung stehenden Deformationswege und des geringen Absorptionsvermögens der Seitenstruktur eines Kraftfahrzeuges größere Probleme.

Bekannte Lösungen zur Entschärfung der bei Seitenkollisionen von Kraftfahrzeugen bestehenden Gefahr für die Insassen sehen eine Versteifung der Kraftfahrzeugtür vor. So sind beispielsweise in die Kraftfahrzeugtür integrierte Profile, die in Fahrzeugquerrichtung eine hohe Steifigkeit und/oder ein hohes Energieaufnahmevermögen besitzen, bekannt. Beispielsweise geht aus der DE 196 33 637 A1 eine Fahrzeugtür mit Seitenaufprallschutz hervor, in deren Türrahmen bogenförmig ausgebildete Haltestangen vorgesehen sind, die im Kollisionsfall derart verdreht und unter Zugbelastung gleichsam der Wirkung eines Fangnetzes deformiert werden.

Eine derartige Versteifung der Seitentüren durch Vorsehen entsprechender Längsträger ist jedoch in schwerwiegenden Kollisionsfällen nicht ausreichend zur Sicherung der Insassen, da bei einer äußeren Krafteinwirkung auf die Seitentür diese durch den Türausschnitt der Fahrzeugkarosserie durchgedrückt wird, so dass der Überlebensraum der Insassen drastisch eingeengt und die Überlebenschancen in gleicher Weise reduziert werden.

Der Stand der Technik kennt überdies eine Reihe von Maßnahmen, die geeignet sind, auf die Seitentür einwirkende Kräfte auf die Fahrzeugkarosserie zu übertragen. Beispielsweise durch entsprechend große Überlappung zwischen Tür und Türausschnitt oder durch aus dem Rand der Tür herausragende Bolzen, die im Kollisionsfall in verstärkte Aussparungen des Türausschnittes der Kfz-Karosserie eingreifen. So geht aus der DE AS 22 15 674 eine für eine Kfz-Tür vorgesehene Verstärkungseinrichtung hervor, die im wesentlichen aus einem nach außen gewölbten Träger besteht, dessen Endabschnitte bei einer durch einen äußeren Aufprall bewirkten Deformation des Trägers in eine gestreckte Form in entsprechend stabile Ausnehmungen innerhalb des Türrahmens eindringen. Der Träger besteht vorzugsweise aus profiliertem Stahlblech, das durch Walzen in entsprechende Form gebracht wird.

Zur Vermeidung eines durch die vorstehenden Maßnahmen bedingte Zunahme des Eigengewichtes des Kraftfahrzeuges wird in der DE 41 25 299 C2 eine für eine Kfz-Tür vorgesehene Verstärkungseinrichtung beschrieben, die aus Gründen der Gewichtsreduzierung aus einer, aus faserverstärktem Verbundwerkstoff gefertigten bogenförmig geformten Verstärkungsträgereinrichtung besteht. Auch in diesem Fall befindet sich die Verstärkungsvorrichtung vollständig innerhalb der Tür, die lediglich im Kollisionsfall aufgrund der einhergehenden Deformation des Verstärkungsträgers beidseitig mit den Endbereichen aus der Tür hervortritt, die ihrerseits wiederum mit stabilen Abstützflanken im Türrahmen der Kfz-Karosserie in Wirkverbindung treten.

### Darstellung der Erfindung

Ausgehend von dem vorbezeichneten Stand der Technik liegt der Erfindung die Aufgabe zugrunde, ein den Insassenschutz optimierendes Sicherheitssystem anzugeben, das im Falle eines Seitenaufpralls einen erhöhten Insassenschutz zu bieten vermag. Insbesondere gilt es, das Sicherheitssystem dahingehend zu verbessern, dass die im Kollisionsfall seitlich auf eine Kraftfahrzeugtür einwirkende Deformationsenergie gezielt und gesichert aus dem Bereich der Kraftfahrzeugtür weggeleitet wird.

Ferner gilt es, ein entsprechendes Verfahren zur Erhöhung des Insassenschutzes in einem Kraftfahrzeug bei einer Seitenaufprall-Situation anzugeben, bei dem die Verletzungsgefahr von Personen gegenüber bisherigen Lösungen erheblich reduziert werden kann.

Die Lösung der der Erfindung zugrundeliegenden Aufgabe ist im Anspruch 1 angegeben. Ein erfindungsgemäßes Verfahren zur Erhöhung des Insassenschutzes in einem Fahrzeug bei einem Seitenaufprall ist Gegenstand des Anspruches 19. Den Erfindungsgedanken vorteilhaft weiterbildende Merkmale sind Gegenstand der Unteransprüche sowie der Beschreibung insbesondere unter Bezugnahme auf die Ausführungsbeispiele zu entnehmen.

Die erfindungsgemäße Vorrichtung gemäß dem Oberbegriff des Anspruches 1 zeichnet sich dadurch aus, dass der Seitenaufprallträger und/oder die Abtsützbereiche innerhalb des die Kraftfahrzeugtür umgebenden Karosseriebereiches wenigstens einen Aktor vorsieht bzw. vorsehen, der durch kontrollierte Zufuhr einer von dem durch die Kollision herrührenden Energieeintrag unabhängigen Energieform aktivierbar ist und die Wirkverbindung zwischen dem Seitenaufprallträger und den Abstützbereichen kontrolliert herbeiführt.

Die bisher bekannten Lösungen nutzen zur Herstellung einer Wirkverbindung zwischen Komponenten der Kraftfahrzeugtür, bspw. der die Kraftfahrzeugtür durchragende, aus faserverstärkten Kunststoff gefertigte Seitenaufprallträger gemäß der DE 41 25 299 C2, und Bereichen der die Kraftfahrzeugtür unmittelbar umgebenden Karosseriebereichen die Energie der Kollision selbst, wodurch weitgehend unkontrolliert sich ausbildende Fügeverbindungen entstehen. Demgegenüber tritt erfindungsgemäß der Seitenaufprallträger mit entsprechenden Abstützbereichen innerhalb stabiler Karosseriebereiche, vorzugsweise innerhalb der A-, B- und/oder C-Säule, angetrieben durch geeignete Aktoren bereits vor dem Kollisionsereignis in Wirkverbindung, die über eine exakt vorgegebene konstruktive Ausgestaltung sowie eine definierte Festigkeit verfügt. Letztere Eigenschaft ist insbesondere für eine in der Konstruktionsphase nutzbare numerische Berechenbarkeit und für einen dementsprechenden theoretischen Optimierungsprozess für die Crashfestigkeit von Kfz-Türen besonders relevant.

Um die Wirkverbindung zwischen den Komponenten rechtzeitig vor dem tatsächlichen kollisionsbedingten Energieeintrag herzustellen, sind entsprechende Aktoren vorgesehen, die mit dem Seitenaufprallträger zusammenwirken und mit einer extra vorgesehenen Energiequelle zur Aktivierung verbunden sind. Grundsätzlich eignen sich hierfür bekannte Aktorsysteme, die eine kontrollierte Wirkverbindung zwischen den vorstehenden Komponenten herbeiführen. In besonders vorteilhafter Weise gilt es eine lösbar feste Verriegelung zwischen den Enden des Seitenaufprallträgers und den jeweiligen Abstützbereichen innerhalb der A-, B- bzw. C-Säule herbeizuführen, die auf Basis einer Formschlussverbindung beruht. In geeigneter Weise können als Aktoren motorisch antreibbare Stellglieder Verwendung finden, sowie auch Kolben-Zylindereinheiten, die auf hydraulischem, pneumatischem oder pyrotechnischem Wirkprinzip beruhen wie in der DE 198 28 444 offenbart ist.
Im einfachsten Fall sorgen Stellglieder für eine Längung des Seitenaufprallträgers, wodurch dieser die Kfz-Türseiten beidseitig überragt und mit seinen Enden in gegenkonturierte Ausnehmungen innerhalb der Abstützbereiche eingreift. Mittels geeigneter Stellglieder innerhalb der Abstützbereiche können die Enden des Seitenaufprallträgers vorzugsweise durch eine Bolzenschlussverbindung innerhalb der Abschlussbereiche verriegelt werden.

In einer besonders vorteilhaften Weiterbildung der Erfindung sorgen intelligente Strukturen, die den gezielten Einsatz von Wandlerwerkstoffen vorsehen, für die im Kollisionsfall vorgesehene Ausbildung einer kontrollierten Fügeverbindung zwischen dem Seitenaufprallträger und den in den stabilen Karosseriebereichen vorgesehenen Abstützbereichen.

Im Unterschied zum eingangs erläuterten Stand der Technik, gemäß dem die die Kraftfahrzeugtür stabilisierende Einheit jeweils aus einem Material oder einem Materialgefüge besteht, das über eine fest vorgegebene Festigkeit, die sich aus der Formgebung sowie Materialwahl der stabilisierenden Einheit ergibt, verfügt, schafft der Einsatz von Wandlerwerkstoffen bei der Ausbildung des Seitenaufprallträgers und/oder der Abstützbereiche die Möglichkeit, durch externe Aktivierung eine Formänderung der jeweiligen Komponenten im Wege intrinsischer Gefügeänderungen herbeizuführen, die ohne jegliche Stellglieder oder Mehrkomponentensysteme erfolgt.

Durch die gezielte Verwendung von aus Wandlerwerkstoffen bestehenden intelligenten Strukturen, auf die nachfolgend im einzelnen eingegangen wird, ist es möglich, die Stabilität und das Festigkeitsverhalten derartiger Strukturen gezielt einzustellen und zu kontrollieren, wobei je nach Wahl und Einsatz bestimmter Wandlerwerkstoffe durch entsprechende Aktivierung und Deaktivierung hervorgerufene Form- und/oder Festigkeitsänderungen vorzugsweise reversibel rückgebildet werden können (eine Ausnahme ist der SMA-Einwegeffekt). Letztere Eigenschaft dient bspw. in vorteilhafter Weise einer Verriegelung sowie Entriegelung von miteinander in Wirkverbindung tretenden Fügepartnem, auf die ebenso im weiteren im einzelnen Bezug genommen wird.

Ein Ausführungsbeispiel weist hierzu wenigstens einen länglich bzw. strangprofilartig ausgebildeten Seitenaufprallträger innerhalb der Kraftfahrzeugtür derart auf, dass der Seitenaufprallträger die Fahrzeugtür horizontal durchragt, wobei die sich gegenüberliegenden Enden des Seitenaufprallträgers vorzugsweise bündig mit der jeweiligen Kraftfahrzeugtürseitenwand abschließen, so dass der Seitenaufprallträger vollständig in der Tür integriert ist und den normalen Bedienkomfort der Tür nicht zu beeinträchtigen vermag. (ggf. kann ein leichter Überstand sinnvoll sein jedoch und ohne Behinderung für die Türbedienung)

Der strangprofilartig ausgebildete Seitenaufprallträger ist vorzugsweise vollständig oder nur in Teilabschnitten aus einem aktivierbaren Wandlerwerkstoff gefertigt, der beispielsweise durch Aufprägen thermischer Energie bzw. Anlegen einer elektrischen Spannung eine spontane Gefügeänderung dergestalt erfährt, dass sich Form und Größe des aus dem jeweiligen Werkstoff gefertigten Seitenaufprallträgerabschnittes kontrolliert zu verändern vermögen. Handelt es sich bei dem eingesetzten Wandlerelement bspw. um ein Formgedächtnismetall bzw. eine Formgedächtnislegierung (z.B. NiTi), so tritt bei geeigneter elektrothermischer Aktivierung des Materials eine spontane in Abhängigkeit von der elektrischen bzw. thermischen Energiezufuhr kontrollierbare Volumenvergrößerung des Seitenaufprallträgers in Erscheinung, wodurch der Seitenaufprallträger durch Längung die Kraftfahrzeugtür seitlich überragt. Die beidseitig, die Kraftfahrzeugtür überragenden Enden des Seitenaufprallträgers, ragen ihrerseits jeweils in steifere Strukturen innerhalb der die Tür unmittelbar umgebenden Fahrzeugkarosserie ein, in die die Hauptlast des Krafteintrages im Wege des Seitenaufpralls eingeleitet wird.

In besonders vorteilhafter Weise sehen die stabileren Strukturen innerhalb der Fahrzeugkarosserie an die Endabschnitte des Seitenaufprallträgers angepasste Abstützbereiche vor, so dass die Fügung zwischen den Enden des Seitenaufprallträgers und den Abstützbereichen in einer definierten Weise erfolgt, um willkürlich auftretende Klemm- oder Scherkräfte zu vermeiden. Vorzugsweise sind die Abstützbereiche sowie die Enden des Seitenaufprallträgers derart ausgebildet, dass beide Fügepartner jeweils über einen Verriegelungsmechanismus miteinander in Wirkverbindung treten, der eine feste, sofern von Vorteil lösbar feste, Fügeverbindung zu gewährleisten vermag. Durch Vorsehen eines Verriegelungsmechanismus, der selbst in geeigneter Weise aus Wandlerwerkstoffen ausgebildet sein kann, um durch entsprechende Aktivierung des jeweiligen Wandlerwerkstoffes den Verriegelungsvorgang auszulösen, vermag die sich im Kollisionsfalle in kontrollierter Weise ergebende Fügeverbindung, die über eine vorher exakt bestimmbare Festigkeit sowie Kraftübertragungseigenschaft verfügt, die Seitenaufprallenergie kontrolliert aufzunehmen und aus dem Türbereich gezielt abzuleiten.

Je nach Wahl und Art der in den Abstützbereichen sowie Endbereichen des Seitenaufprallträgers verwendeten Wandlerwerkstoffe ist es möglich, durch aktivierbare reversibel wirkende Gefügeänderungen den geöffneten Ausgangszustand der Fügepartner wieder herzustellen und auf diese Weise ein Öffnen bzw. Lösen der Fügeverbindung bzw. Verriegelung zu ermöglichen. Sofern keine weiteren, durch den Seitenaufprall verursachte Materialdeformationen zwischen Tür und Karosseriebereich eingetreten sind, die ein ungehindertes Lösen der Tür von der übrigen Karosserie verhindern, wird mit der vorstehend beschriebenen Massnahme die Insassenbergung nach derartigen Kollisionsfällen gegenüber dem Stand der Technik erheblich erleichtert.

Neben der vorstehend beschriebenen Variante des Vorsehens wenigstens eines horizontal, die Kraftfahrzeugtür durchragenden, strangprofilartig ausgebildeten Seitenaufprallträgers, das vorzugsweise, je nach Fahrzeugtyp, zwischen A- und B-Säule bzw. zwischen A- und C-Säule bzw. zwischen B- und C-Säule in entsprechenden Karosseriebereichen im Kollisionsfalle abstützbar ist, ist es ebenfalls denkbar und möglich, wenigstens einen entsprechend ausgebildeten Seitenaufprallträger in vertikaler Anordnung innerhalb der Kraftfahrzeugtür vorzusehen, das im Kollisionsfall im Dach- und Bodenbereich durch entsprechende Längenspreizung stabile Verankerungsstellen vorfindet.

Eine weitere vorteilhafte Ausbildung des sich im Kollisionsfall längenden Seitenaufprallträgers betrifft das Vorsehen von die Aufprallenergie im Wege der Kollision zumindest teilweise aufnehmenden Opferstrukturen im Bereich der Abstützbereiche innerhalb der die Tür umgebenden stabilen Karosserie, in die die Enden des gelängten Seitenaufprallträgers eingreifen und in denen die Aufprallenergie im Kollisionsfall gezielt dissipiert werden kann.

Alternativ oder in Kombination zu derartigen Opferstrukturen können überdies aktiv ansteuerbare oder passiv dämpfende Komponenten innerhalb der Abstützbereiche vorgesehen werden, um im Kollisionsfalle einen zusätzlichen Beitrag zur Dissipation der Aufprallenergie zu leisten. Auch die Ausbildung derartiger aktiv ansteuerbarer Komponenten zur gezielten Steuerung des Verlaufes der Energiedissipation ist mit Hilfe geeignet ausgewählter Wandlerstoffe, die beispielsweise auf dem Formgedächtniseffekt, dem Piezoeffekt oder auf magnetostriktiven Effekten beruhen, realisierbar.

Neben der der Erfindung zugrunde liegenden Idee eines gezielt kontrolliert herbeigeführten Abstützens des sich längenden Seitenaufprallträgers innerhalb stabiler Seitenbereiche der Karosserie, ist es überdies besonders vorteilhaft, den Seitenaufprallträger zusätzlich derart auszugestalten, dass der Träger im Kollisionsfall eine dem Energieeintrag zugewandte Krümmung längs seiner strangprofilartig ausgebildeten Gestalt annimmt, wodurch ein zusätzlicher Deformationsweg geschaffen wird und darüber hinaus eine Aufspaltung des durch den Energieeintrag auf das gekrümmte Trägerelement einwirkenden Lastvektors in Quer- und Längskräfte ermöglicht. Eine aktiv steuerbare Krümmung des Seitenaufprallträgers kann dadurch realisiert werden, indem der Seitenaufprallträger vollständig oder teilweise aus einem Wandlerwerkstoff gefertigt ist, der selbst über eine Vorkrümmung verfügt und bei entsprechender Aktivierung eine Verstärkung der gekrümmten Form längs seiner Längserstreckung erfährt, wobei der vorgekrümmte, längliche Seitenaufprallträger derart innerhalb der Tür integriert ist, dass die konvexe Seite des Seitenaufprallträgers der Türaußenwand zugewandt ist und bei einem möglichen Seitenaufprall durch Vergrößerung der Krümmung eine zusätzliche Knautschzone schafft. So ist die Verwendung von aus Wandlerwerkstoffen bestehenden, vorgekrümmt ausgebildeten Seitenaufprallträgern denkbar, die in der vorstehend beschriebenen Weise innerhalb einer Kfz-Tür montiert sind, wobei die konvexe Seite des vorgekrümmten Seitenaufprallträgers unmittelbar an der Innenseite der äußeren Blechbegrenzung der Kfz-Tür verläuft. Im Kollisionsfalle wird der Seitenaufprallträger derart aktiviert, so dass der Krümmungsradius des Seitenaufprallträgers abnimmt und zugleich die konvexe Seite des Seitenaufprallträgers das nach außen gewandte Türblech von innen überragt, um zusätzlichen Deformationsraum bzw. eine zusätzliche seitliche Knautschzone zu schaffen.

Alternativ zur vollständigen Ausbildung des Seitenaufprallträgers aus einem für die vorstehend beschriebene Formänderung befähigten Wandlerwerkstoffes, beispielsweise Formgedächtnismetall, ist es auch denkbar, die Krümmungszunahme des in vorgekrümmter Form innerhalb der Kfz-Tür vorgegebenen Seitenaufprallträgers durch aktives Stauchen bzw. Längen über beide Enden des Seitenaufprallträgers herbeizuführen. In konsequenter Weiterentwicklung dieses alternativen Gedankens ist eine Ausführungsform ebenso möglich, bei der der die Kfz-Tür durchragende Seitenaufprallträger zwar selbst nicht aus einem Wandlerwerkstoff besteht, vielmehr weisen die stabilen, unmittelbar an die Kfz-Tür angrenzenden Abstützbereiche innerhalb der Karosseriebereiche, die im Kollisionsfall mit dem Seitenaufprallträger in Wirkverbindung treten, kontrolliert aktivierbare intelligente Strukturen derart auf, dass sie im Kollisionsfall durch entsprechende Formänderung jeweils seitlich in den Türbereich eindringen und über entsprechend ausgebildete Fügeverbindungen mit dem innerhalb der Kfz-Tür vorgesehenen Seitenaufprallträger in Wirkverbindung treten, wodurch der Seitenaufprallträger eine gewünschte, wie vorstehend beschriebene, Krümmung im Wege einer gezielten Stauchung erfährt. Selbstverständlich sind auch kombinierte Ausführungsformen denkbar, bei denen Wandlerwerkstoffe sowohl in den Abstützbereichen vorgesehen sind sowie der Seitenaufprallträger aus einem Wandlerwerkstoff besteht. Ebenso kann die Stauchung bzw. Längung durch konventionelle Aktoren realisiert werden, wobei diese aufgrund begrenzter Steifigkeiten voraussichtlich für Crash-Anwendungen nicht sinnvoll sind.

Der erfindungsgemäße Gedanke soll grundsätzlich neben der bevorzugten Auswahl und Verwendung von aus Feststoffen bestehenden Wandlerwerkstoffen, wie beispielsweise Formgedächtnismetalle bzw. -legierungen, Piezo-Metalle sowie -Keramiken, magnetostriktive Legierungen, ebenso auch viskose oder flüssige Wandierwerkstoffe umfassen, wie beispielsweise Piezo-Polymere, elektrorheologische oder magnetorheologische Fluide, die jedoch in geeigneten Behältnisse zu integrieren sind, um in geeigneter Weise Druck und gegebenenfalls Zugkräfte aufnehmen zu können. So vermögen derartige Werkstoffe durch gezielte Generation innerer Kräfte ihre strukturmechanischen Eigenschaften gezielt zu verändern, wodurch neben der bereits erwähnten Eigenschaft der Formänderung auch eine gezielte Einstellung z.B. der Struktursteifigkeit und/oder der Dämpfungscharakteristik möglich ist.

Die gezielte Aktivierung vorstehend genannter Wandlerwerkstoffe erfolgt auf unterschiedliche Weise je nach Wahl der eingesetzten Werkstoffe. Beispielsweise sind Formgedächtnismetalle durch thermische oder elektrothermische Energiezufuhr, d.h. eine mit der elektrischen Aktivierung verbundenen lokalen Erwärmung im Rahmen der auftretenden ohmschen Verlustwärme innerhalb von Bruchteilen von Sekunden zu aktivieren, wodurch die Werkstoffe eine gewünschte Form- und/oder Strukturänderung erfahren. In gleicher Weise lassen sich auf Piezo-Effekte beruhende Werkstoffe zu entsprechenden Formänderungen aktivieren. Eine weitere Möglichkeit der gezielten Aktivierung von auf magnetostriktiven Effekten beruhenden Werkstoffen sieht die Erzeugung magnetischer Felder vor, die ebenfalls kurzfristig mit Hilfe geeigneter Elektromagnet-Anordnungen generierbar sind.

Für die Aktivierung der vorstehend beschriebenen intelligenten Strukturen bedarf es wenigstens eines Auslösesignales, das mit Hilfe von im Fahrzeug eingebauten strukturmechanischen Sensoren gewonnen wird, die einen im Wege eines Seitenaufpralls auf das Kraftfahrzeug einwirkenden Energieeintrag registrieren. Die zum Insassenschutz vorgesehenen Massnahmen werden in diesem Fall mit einer geringen Zeitverzögerung nach dem Energieeintrag in das Kfz aktiviert. Eine verbesserte Ausführungsform sieht jedoch vor, mit geeigneten, am Kfz angebrachten Sensoren, eine zeitlich unmittelbar bevorstehende Seitenaufprall-Situation zu detektieren. Dies kann beispielsweise mit geeignet angebrachten, berührungslos arbeitenden Objektabstandssensoren durchgeführt werden, sogenannte Annäherungssensoren, die in an sich bekannter Weise auf der Basis von Ultraschall-Infrarot- oder Induktionstechnik beruhen. Mit Hilfe derartiger Annäherungssensoren ist es möglich, die vorstehend beschriebenen Schutzmechanismen zur Erhöhung der Seitenstabilität einer Kraftfahrzeugtür unmittelbar vor dem eigentlichen Krafteintrag, bedingt durch einen Seitenaufprall, zu aktivieren, so dass die maximale Stabilität sowie vergrößerte Knautschzonenerzeugung bereits vor dem eigentlichen Krafteintrag hergestellt ist. Geeignete Sensoren sind dem Fachmann geläufig und benötigen daher an dieser Stelle keiner weiteren Erläuterung.

Neben dem vorstehend beschriebenen Einsatz intelligenter Strukturen mit entsprechender Aktivierung ist es auch möglich, Wandlerwerkstoffe passiv zu betreiben, d.h. ohne Aktivierung. Es hat sich gezeigt, dass beispielsweise durch Verwendung eines aus Formgedächtnismetall gefertigten Seitenaufprallträgers, der eine Kraftfahrzeugtür horizontal, innenliegend durchragt, eine durch fertigungs- bzw. materialtechnische Einstellung des Steifigkeitsverlaufes mögliche Anpassung an den Energieeintrag bei einem Seitenaufprall gestattet. Hierbei weisen beispielsweise Formgedächtnismetalle Superelastizitäten auf sowie auf der Materialhysterese basierende Strukturdämpfungen, die bei geeigneter Einstellung in besonderer Weise als Elemente zur Aufnahme von Deformationsenergie dienen. So vermögen vorzugsweise aus Feststoffen bestehende Wandlerwerkstoffe, allen voran die vielfach erwähnten Formgedächtnismaterialien, in Abhängigkeit eines auf die jeweiligen Werkstoffe einwirkenden Energieeintrages eine bestimmte Gefügeänderung zu erfahren, die letztlich zu einer vom Krafteintrag abhängigen Materialsteifigkeit führt. Überdies ist es auch möglich, das Verhalten der Materialsteifigkeit neben des erwähnten Energieeintrages durch eine gezielte Versorgung des Werkstoffes mit elektrischer Energie einzustellen. Diese Möglichkeiten führen letztlich zur Erkenntnis, dass derartige Materialien in überaus vorteilhafter Weise im Bereich des Kraftfahrzeuges zur Absorption von Deformationsenergie einsetzbar sind.

Auf Basis dieser Kenntnis beruht das erfindungsgemäße Verfahren zur Erhöhung des Insassenschutzes in einem Fahrzeug bei einem Seitenaufprall, bei dem der Seitenaufprallträger und/oder die Abtsützbereiche innerhalb des die Kraftfahrzeugtür umgebenden Karosseriebereiches durch kontrollierte Zufuhr einer von dem durch die Kollision herrührenden Energieeintrag unabhängigen Energieform aktivierbar sind, so dass eine Wirkverbindung zwischen dem Seitenaufprallträger und den Abstützbereichen kontrolliert herbeigeführt wird.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierter Längsschnitt durch eine zwischen A- und B-Säule eines Kraftfahrzeuges befindliche Kraftfahrzeugtür mit einer erfindungsgemäß ausgebildeter stabilisierenden Einheit,
- Fig. 2a, b: alternative Ausführungsformen für Kfz mit A-, B- und C-Säule, sowie
- Fig. 3: schematisierte Seitenansicht einer Kraftfahrzeugtür mit einer vertikal verlaufenden stabilisierenden Einheit.

### Wege zur Ausführung der Erfindung, gewerbliche Verwendbarkeit

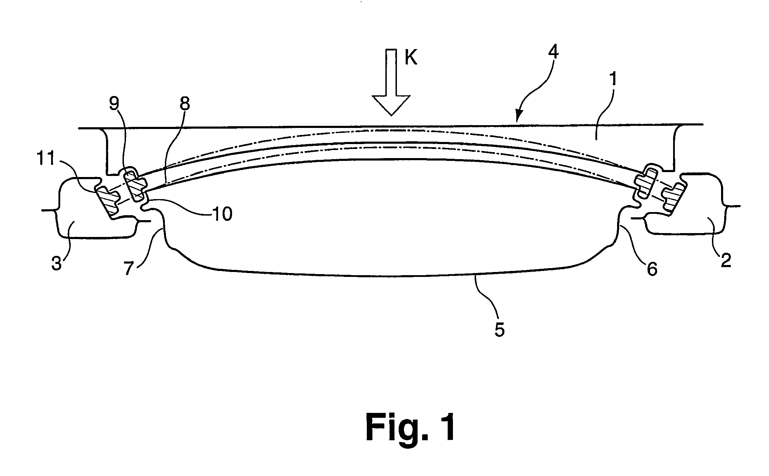

In Fig. 1 ist ein stark schematisierter Längsschnitt durch eine Kraftfahrzeugtür 1 dargestellt, die zwischen der A-Säule 2 und der B-Säule 3 eines nicht weiter dargestellten Kraftfahrzeuges angeordnet ist. Die Kraftfahrzeugtür 1 ist in an sich bekannter Weise seitlich nach außen durch ein Außenblech 4, gegenüber dem Innenraum durch ein Innenblech 5 sowie gegenüber der A-Säule 2 und B-Säule 3 jeweils durch die Türseitenwände 6 und 7 begrenzt. Im Inneren der Kfz-Tür 1 ist eine stabilisierende Einheit in Form eines Seitenaufprallträgers 8 vorgesehen, der die Kfz-Tür 1 in horizontaler Orientierung in der in Fig. 1 angegebenen Weise (siehe durchgezogene Linienführung) durchragt. Es sei angenommen, dass der Seitenaufprallträger 8 aus einem Wandlerwerkstoff, vorzugsweise aus einer Formgedächtnismetall-Legierung (NiTi) besteht und eine zum Außenblech 4 konvex gekrümmte Form aufweist. Die beiden Enden des strangprofilartig ausgebildeten Seitenaufprallträgers 8, das einen runden oder eckigen Querschnitt aufweist, schließen bündig mit den Türseitenrändern 6 und 7 ab. Zusätzlich ist an beiden Enden des Seitenaufprallträgers 8 jeweils ein Abstützelement 9 vorgesehen, das in einer in der Türseitenwand 6, 7 eingearbeiteten vertieften Kontur 10 platziert ist, in einer Weise, in der die Türfunktion, d.h. Öffnen und Schließen, nicht beeinträchtigt wird.

Tritt der Fall einer zeitlich unmittelbar bevorstehenden Seitenaufprall-Situation auf, die mit Hilfe nicht dargestellter geeignet konzipierter, berührungslos arbeitender Sensoren erfassbar ist, so wird der aus einem Wandlerwerkstoff bestehende Seitenaufprallträger 8 durch Versorgung mit elektrischer Energie derart aktiviert, so dass basierend auf einer Gefügeänderung der Seitenaufprallträger 8 eine Formänderung erfährt, die sowohl zu einer Längung des Seitenaufprallträgers 8, als auch zu einer Vergrößerung der Vorkrümmung führt. Dieser Fall ist in Fig. 1 durch die strichpunktierte Linienführung angedeutet. Aufgrund der Längung des Seitenaufprallträgers 8 gelangen die Abstützelemente 9 in innigen Presskontakt zur jeweiligen A- und B-Säule 2, 3, die jeweils geeignete Abstützflächen für die Abstützelemente 9 vorsehen. Die A- und B-Säule 2, 3 stellen stabile Karosseriebereiche dar, zwischen denen der gelängte Seitenaufprallträger 8 über die jeweiligen Abstützelemente 9 eine mechanisch stabile Abstützung erfahren. Überdies bewirkt die beidseitige Abstützung des Seitenaufprallträgers 8 an der A- und B-Säule 2, 3 eine Vergrößerung der Krümmung des Seitenaufprallträgers 8 in Richtung des Außenbleches 4 der Kfz-Tür 1, wodurch eine zusätzliche Knautschzone gegenüber einem seitlich auf die Kfz-Tür 1 einwirkenden Krafteintrag K gebildet wird.

Schließlich führt die gezielt aktivierbare Formänderung des Seitenaufprallträgers 8 zu einer Erhöhung der Materialsteifigkeit des Wandlerwerkstoffes, wodurch der Seitenaufprallträger 8 den auf die Kraftfahrzeugtür 1 einwirkenden Krafteintrag K effektiv von dem Türbereich weg in die stabil ausgebildeten Karosseriebereiche der A- und B-Säule abzuleiten vermag. Gleichzeitig bedingt die Gefügeänderung eine Änderung der Materialdämpfung.

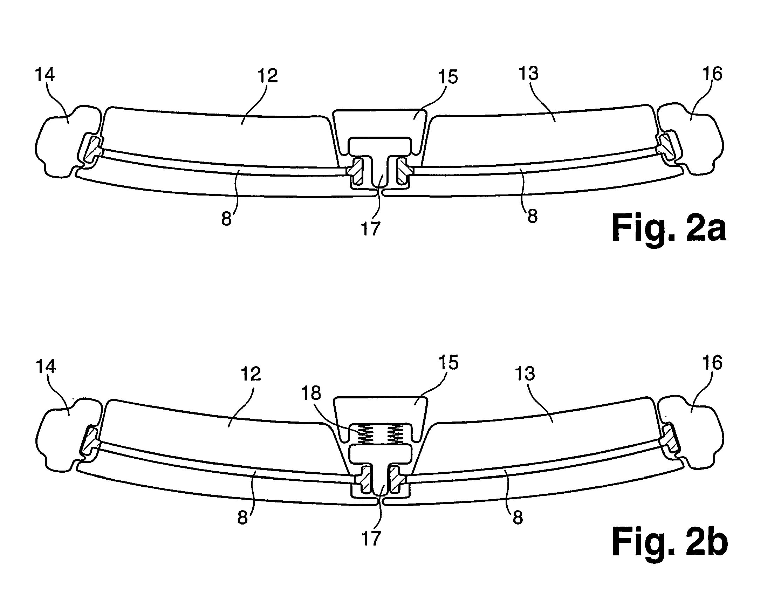

Basierend auf dem Ausführungsbeispiel gemäß Fig. 1 zeigen die Fig. 2 a und b das Zusammenwirken zweier stabilisierender Einheiten, die längs einer Fahrzeugseite in der vorderen und hinteren Tür vorgesehen sind. So stellt Fig. 2a die Ausgangssituation dar, wohingegen Fig. 2b den aktivierten Zustand unmittelbar vor einem Kollisionsfall zeigt.

Die Fig. 2a und b zeigen jeweils zwei Türen 12 und 13, die jeweils zwischen A-Säule 14 und B-Säule 15 bzw. zwischen B-Säule 15 und C-Säule 16 vorgesehen sind. Vergleichbar zum Ausführungsbeispiel gemäß Fig. 1 weisen die Türen 12 und 13 entsprechende, als stabilisierende Einheiten ausgebildete Seitenaufprallträger 8 auf. Die B-Säule15 ist im gezeigten Ausführungsbeispiel gemäß der Fig. 2a und b derart ausgeführt, dass sie zur Richtung der Fahrzeugaußenwand 4 eine bewegliche Komponente 17 vorsieht. Die Funktion der beweglichen Komponente 17 ist in der in Fig. 2b dargestellten Fallsituation ersichtlich. Es sei angenommen, dass im Kollisionsfall beide Seitenaufprallträger 8 aktivierbar sind und eine gelängte Form annehmen, wodurch sie fest mit der A-Säule 14 und B-Säule 15 bzw. mit der B-Säule 15 und der C-Säule 16 in Wirkverbindung treten. Die Abstützung der Seitenaufprallträger 8 über ihre jeweiligen Abstützelemente 9 erfolgt beidseitig zu Seiten der B-Säule 15 derart, dass sie nicht unmittelbar gegen die B-Säule 15 drücken, sondern beidseitig gegen die bewegliche Komponente 17, wie in Fig. 2b dargestellt. Zusätzlich sorgen im Kollisionsfall von der B-Säule 15 abspreizbare Dämpfungselemente 18 dafür, dass die bewegliche Komponente 17 in Richtung der Kraftfahrzeugtür-Außenseite 4 beabstandet wird, wodurch eine zusätzliche, weitere Knautschzone gegenüber dem Fahrzeuginnenbereich geschaffen wird. Die Dämpfungselemente 18 sind vorzugsweise gleichsam den Seitenaufprallträgern 8 aus einem Wandlerwerkstoffmaterial gefertigt, beispielsweise bestehend aus einem Formgedächtnismaterial, das im Kollisionsfalle in der beschriebenen Weise gezielt aktivierbar ist.

Selbstverständlich tragen die einzelnen, in der Fig. 2 dargestellten Seitenaufprallträger 8 aufgrund ihrer Krümmungsänderung zusätzlich zur Vergrößerung der Knautschzone bei, ohne an dieser Stelle wiederholt im einzelnen darauf einzugehen.

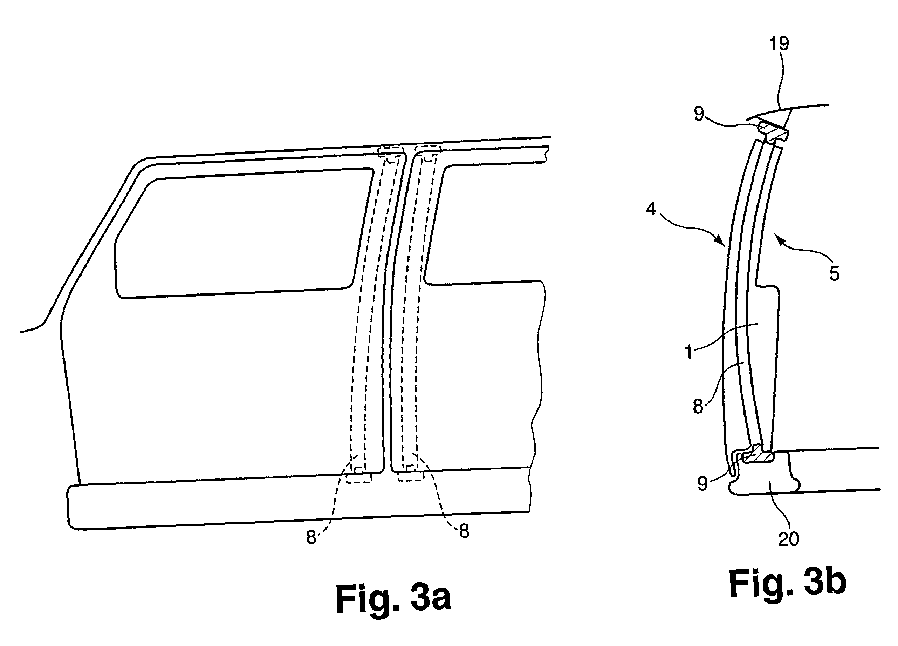

Fig. 3a, b zeigt ein Ausführungsbeispiel, das vertikal innerhalb der Kfz-Tür 1 angeordnete Seitenaufprallträger 8 vorsieht, deren Abstützelemente 9 im Kollisionsfall mit stabilen Karosseriebereichen im Dach- sowie Schwellerbereich 19, 20 in Wirkverbindung treten. Fig. 3b zeigt einen Querschnitt durch die Anbringung des Seitenaufprallträgers 8 innerhalb der Tür 1, die gleichsam der Figurenbeschreibung zu einen Türaußenbereich 4, einen Türinnenbereich 5 vorsieht. Im Kollisionsfalle tritt der Seitenaufprallträger 8 mit den an beiden Enden vorgesehenen Abstützelementen 9 in Wirkverbindung mit der Dachkonstruktion 19 bzw. mit dem Schwellerbereich 20.

Selbstverständlich sind beliebige Kombinationen der vertikal verlaufenden Seitenaufprallträgeranordnung gemäß Fig. 3 sowie der horizontal orientierten Seitenaufprallträgeranordnung gemäß Fig. 1 und 2 innerhalb einer einzigen Fahrzeugtür möglich.

### Bezugszeichenliste

- 1: Kraftfahrzeugtür
- 2: A-Säule
- 3: B-Säule
- 4: Türaußenseite
- 5: Türinnenseite
- 6, 7: Türseitenwandbereiche
- 8: Seitenaufprallträger
- 9: Abstützelement
- 10: Vertiefte Kontur
- 11: Gegenkontur
- 12, 13: Kfz-Tür
- 14: A-Säule
- 15: B-Säule
- 16: C-Säule
- 17: Bewegliche Komponente
- 18: Dämpfungselement
- 19: Dachkarosseriebereich
- 20: Schwellerkarosseriebereich

## Patentansprüche

1. Vorrichtung für ein Kraftfahrzeug zum Insassenschutz beim Seitenaufprall oder bei einer dem Seitenaufprall ähnlichen Kollision, bei der ein Energieeintrag seitlich auf einen Türbereich des Kraftfahrzeuges einwirkt, wobei sich ein Fahrzeugsitz auf der dem Energieeintrag abgewandten Seite der Kraftfahrzeugtür (1) befindet, mit wenigstens einer seitlich auf die Kraftfahrzeugtür (1) einwirkenden Energieeintrag stabilisierenden Einheit, die wenigstens einen die Kraftfahrzeugtür (1) innenliegend durchragenden Seitenaufprallträger (8) vorsieht, der im Kollisionsfall mit wenigstens zwei Abstützbereichen innerhalb die Kraftfahrzeugtür (1) umgebenden Karosseriebereichen in Wirkverbindung tritt,
**dadurch gekennzeichnet, dass**
der Seitenaufprallträger (8) zumindest teilweise und/oder dessen gegenüberliegende Abstützbereiche aus einem Wandlerwerkstoff besteht, und
dass der Wandlerwerkstoff durch Zufuhr einer von dem durch die Kollision herrührenden Energieeintrag unabhängigen Energieform eine Formänderung erfährt und die Wirkverbindung zwischen dem Seitenaufprallträger (8) und den Abstützbereichen herbeiführt.

2. Vorrichtung nach Anspruch 1,
**dadurch gekennzeichnet, dass** die Wirkverbindung eine lösbar feste
Fügeverbindung längs wenigstens einer vorgegebenen Fügefläche (11) ist.

3. Vorrichtung nach Anspruch 1 oder 2,
**dadurch gekennzeichnet, dass** die Wirkverbindung eine Formschlussverbindung ist, die einen ansteuerbaren Ver- und Entriegelungsmechanismus aufweist.

4. Vorrichtung nach einem der Ansprüche 1 bis 3,
**dadurch gekennzeichnet, dass** der Wandlerwerkstoff aus wenigstens einer der nachfolgenden Werkstoffklassen besteht: Piezo-Keramik, Piezo-Polymer, elektrostriktive Keramik, elektrorheologisches Fluid, Polymergel, magnetorheologisches Fluid, Formgedächtnislegierung, Formgedächtnispolymer.

5. Vorrichtung nach einem der Ansprüche 1 bis 4,
**dadurch gekennzeichnet, dass** der wenigstens aus dem Wandlerwerkstoff bestehende Teil des Seitenaufprallträgers (8) unmittelbar vor und/oder während einer Seitenaufprallsituation eine Formänderung derart erfährt, dass der Seitenaufprallträger (8) beidseitig die Fahrzeugtür (1) überragt und mit den angrenzenden Abstützbereichen innerhalb der stabilen Karosseriebereichen eine mechanisch feste Fügeverbindung eingeht.

6. Vorrichtung nach einem der Ansprüche 1 bis 5,
**dadurch gekennzeichnet, dass** die stabilen Karosseriebereiche die A- und B-, A- und C- und/oder die B- und C-Säulen des Kraftfahrzeuges sind, und
dass der Seitenaufprallträger (8) die Fahrzeugtür (1) im Wesentlichen horizontal durchragt.

7. Vorrichtung nach einem der Ansprüche 1 bis 5,
**dadurch gekennzeichnet, dass** die Karosseriebereiche der Dach- (19) und Bodenbereich (22) des Kraftfahrzeuges sind, und
dass der Seitenaufprallträger (8) die Fahrzeugtür (1) im Wesentlichen vertikal durchragt.

8. Vorrichtung nach einem der Ansprüche 1 bis 7,
**dadurch gekennzeichnet, dass** der Seitenaufprallträger (8) in Form eines länglichen Strangprofils ausgebildet ist.

9. Vorrichtung nach Anspruch 8,
**dadurch gekennzeichnet, dass** das Strangprofil ganzheitlich oder teilweise aus dem Wandlerwerkstoff besteht, vorzugsweise aus einem Formgedächtnismetall oder - legierung.

10. Vorrichtung nach Anspruch 8 oder 9,
**dadurch gekennzeichnet, dass** das Strangprofil jeweils an seinen gegenüberliegenden Endbereichen Bereiche aus Wandlerwerkstoff vorsieht.

11. Vorrichtung nach einem der Ansprüche 1 bis 10,
**dadurch gekennzeichnet, dass** der Seitenaufprallträger (8) eine Längserstreckung aufweist, längs der der Seitenaufprallträger (8) eine dem kollisionsbedingten Energieeintrag im Wege eines Seitenaufpralls zugewandte Krümmung mit einem ersten Krümmungsradius aufweist, und
dass der Seitenaufprallträger (8) unmittelbar vor und während einer Seitenaufprallsituation eine Formänderung derart erfährt, dass der Seitenaufprallträger (8) eine Krümmung mit einem zweiten, kontrolliert einstellbaren Krümmungsradius einnimmt, der kleiner als der erste Krümmungsradius ist.

12. Vorrichtung nach Anspruch 11,
**dadurch gekennzeichnet, dass** der Seitenaufprallträger (8) im Zustand des zweiten Krümmungsradius verglichen mit dem Zustand, bei dem der Seitenaufprallträger (8) den ersten Krümmungsradius aufweist, eine entgegen der Richtung, aus der der Energieeintrag auf die Kraftfahrzeugtür (1) einwirkt, hervorgetretene räumliche Lage einnimmt und somit eine zusätzliche Knautschzone schafft.

13. Vorrichtung nach Anspruch 11 oder 12,
**dadurch gekennzeichnet, dass** die Formänderung des Seitenaufprallträgers (8) durch kontrollierte Stauchung des Seitenaufprallträgers (8) im Wege eines beidseitigen Erfassens der Enden des Seitenaufprallträgers (8) mittels in den stabilen Abstützbereichen vorgesehenen Aktoren herbeiführbar ist, und/oder,
dass die Formänderung des Seitenaufprallträgers (8) im Wege einer kontrolliert aktivierbaren intrinsischen Gefügeänderung des zumindest teilweise aus Wandlerwerkstoff bestehenden Seitenaufprallträgers (8) herbeiführbar ist.

14. Vorrichtung nach einem der Ansprüche 1 bis 13,
**dadurch gekennzeichnet, dass** die Abstützbereiche jeweils einen Aktor mit einer intelligenten Struktur vorsehen, dass vor oder während einer Seitenaufprallsituation die jeweils die intelligenten Strukturen in den Abstützbereichen mit dem
- Seitenaufprallträger (8) in Wirkverbindung treten und mit dem Seitenaufprallträger (8) eine kraft- und/oder formschlüssige Fügeverbindung eingehen.

15. Vorrichtung nach einem der Ansprüche 1 bis 14,
**dadurch gekennzeichnet, dass** die intelligente Struktur als selbstregelnde Struktur auf der Grundlage der Adaptronik arbeitet.

16. Vorrichtung nach einem der Ansprüche 1 bis 14,
**dadurch gekennzeichnet, dass** die intelligente Struktur als selbstregelnde Struktur auf der Grundlage der Mechatronik arbeitet.

## Claims

1. A device for a motor vehicle for protecting passengers during a side impact or during a collision similar to a side impact, in which an energy input acts essentially laterally on a door area of the motor vehicle, a vehicle seat being located on the side of the motor vehicle door (1) facing away from the energy input, having at least one unit stabilizing an energy input acting essentially laterally on the motor vehicle door (1), which provides at least one lateral impact girder traversing the motor vehicle door (1) internally, which is operationally linked in case of collision to at least two support areas within stable vehicle body areas enclosing the motor vehicle door (1),
**characterized in that** the side impact girder (8) and/or its diametrically opposing support areas at least partially comprise a conversion material, and the conversion material undergoes a shape change due to supply of a form of energy independent of the energy input originating due to the collision and produces the operational link between the side impact girder (8) and the support areas in a controlled way.

2. The device according to Claim 1,
**characterized in that** the operational link is a removable, solid joint connection along at least one predefined join face (11).

3. The device according to Claim 1 or 2,
**characterized in that** the operational link is a formfitting connection, which has an activatable locking and unlocking mechanism.

4. The device according to Claim 1 through 3,
**characterized in that** the conversion material comprises at least one of the following material classes: piezo ceramic, piezo polymer, electrostrictive ceramic, electrorheological fluid, polymer gel, magnetorheological fluid, memory shape alloy, memory shape polymer.

5. The device according to Claims 1 through 4,
**characterized in that** the part of the side impact girder (8) at least comprising conversion material undergoes a shape change directly before and during a side impact situation in such way that the side impact girder (8) projects beyond the vehicle door (1) on both sides and enters into a mechanically solid joint connection with the adjoining support areas within the stable vehicle body areas.

6. The device according to one of Claims 1 through 5,
**characterized in that** the stable vehicle body areas are the A and B, A and C, and/or the B and C columns of the motor vehicle,
and the side impact girder (8) traverses the vehicle door (1) essentially horizontally.

7. The device according to one of Claims 1 through 5,
**characterized in that** the stable vehicle body areas are the roof (19) and floor areas (22) of the motor vehicle, and
the side impact girder (8) traverses the vehicle door (1) essentially vertically.

8. The device according to one of Claims 1 through 7,
**characterized in that** the side impact girder (8) is implemented in the form of an oblong extruded profile.

9. The device according to Claim 8,
**characterized in that** the extruded profile entirely or partially comprises the conversion material, preferably a shape memory metal or alloy.

10. The device according to Claim 8 or 9,
**characterized in that** the extruded profile provides areas made of conversion material on its diametrically opposite end areas.

11. The device according to one of Claims 1 through 10,
**characterized in that** the side impact girder (8) has a longitudinal extension, along which the side impact girder (8) has a curvature facing toward the energy input caused by a collision in the course of a side impact having a first radius of curvature, and
the side impact girder (8) undergoes a shape change immediately before and during a side impact situation in such way that the side impact girder (8) assumes a curvature having a second radius of curvature, which may be set in a controlled way, and which is smaller than the first radius of curvature.

12. The device according to Claim 11
**characterized in that** the side impact girder (8) assumes a spatial position projecting out against the direction from which the energy input acts on the motor vehicle door (1) in the state of the second radius of curvature compared to the state in which the side impact girder (8) has the first radius of curvature, and thus provides an additional crumple zone.

13. The device according to Claim 11 or 12,
**characterized in that** the shape change of the side impact girder (8) may be produced through controlled compression of the side impact girder (8) in the course of engagement on both sides of the ends of the side impact girder (8) using actuators provided in the stable support areas, and/or, the shape change of the side impact girder (8) may be produced in the course of an intrinsic structural change, activatable in a controlled way, of the side impact girder (8), which at least partially comprises conversion material.

14. The device according to one of Claims 1 through 13,
**characterized in that** the support areas each provide an actuator having an intelligent structure, each of the intelligent structures in the support areas is operationally linked to the side impact girder (8) before or during a side impact situation and produces a frictional and/or formfitting joint connection with the side impact girder (8).

15. The device according to one of Claims 1 through 14,
**characterized in that** the intelligent structure operates as a self-regulating structure based on adaptronics.

16. The device according to one of Claims 1 through 14,
**characterized in that** the intelligent structure operates as a self-regulating structure based on mechatronics.

## Revendications

1. Dispositif destiné à un véhicule automobile, pour protéger les passagers lors d'un impact latéral ou d'une collision analogue à l'impact latéral, pendant laquelle une introduction d'énergie agit latéralement sur une zone de portière, du véhicule automobile, un siège du véhicule se trouvant du côté de la portière de véhicule (1) opposée à l'introduction d'énergie, avec au moins une unité stabilisant l'introduction d'énergie agissant latéralement sur la portière de véhicule (1) prévoyant au moins un support d'impact latéral (8) traversant la portière de véhicule (1) à l'intérieur, qui en cas de collision entre en liaison active avec aux moins deux zones de la carrosserie entourant des zones d'appui à l'intérieur de la portière de véhicule (1),
**caractérisé en ce que** le support d'impact latéral (8) consiste au moins partiellement et/ou ses zones d'appui opposées consistent en un matériau transducteur et **en ce que** le matériau transducteur subit une modification de forme par apport d'une forme d'énergie indépendante de l'introduction d'énergie provenant de la collision et provoquant la liaison active entre le support d'impact latéral (8) et les zones d'appui.

2. Dispositif selon la revendication 1,
**caractérisé en ce que** la liaison active est une liaison solide amovible par aboutage le long d'au moins une surface d'aboutage (11) prédéfinie.

3. Dispositif selon la revendication 1 ou 2,
**caractérisé en ce que** la liaison active est une liaison par complémentarité de forme, qui comporte un mécanisme de verrouillage et de déverrouillage susceptible d'être amorcé.

4. Dispositif selon l'une quelconque des revendications 1 à 3,
**caractérisé en ce que** le matériau transducteur consiste dans au moins l'une des classes de matériaux suivantes : piézocéramique, piézopolymère, céramique électrorestrictive, fluide électrorhéologique, gel polymère, fluide magnétorhéologique, alliage à mémoire de forme, polymère à mémoire de forme.

5. Dispositif selon l'une quelconque des revendications 1 à 4,
**caractérisé en ce que** la au moins une partie du support d'impact latéral (8) consistant dans le matériau transducteur subit directement avant et/ou pendant une situation d'impact latéral une modification de forme, de sorte que le support d'impact latéral (8) saillisse des deux côtés pardessus la portière de véhicule (1) et entre en liaison par aboutage solide avec les zones d'appui adjacentes à l'intérieur des zones stables de la carrosserie.

6. Dispositif selon l'une quelconque des revendications 1 à 5,
**caractérisé en ce que** les zones stables de la carrosserie, sont le montant avant et le montant milieu, le montant avant et le montant arrière et/ou le montant milieu et le montant arrière du véhicule automobile et **en ce que** le support d'impact latéral (8) traverse sensiblement à l'horizontale la portière de véhicule (1).

7. Dispositif selon l'une quelconque des revendications 1 à 5,
**caractérisé en ce que** les zones de carrosserie sont la zone de toit (19) et la zone de fond (22) du véhicule automobile et
**en ce que** le support d'impact latéral (8) traverse sensiblement à la verticale la portière de véhicule (1).

8. Dispositif selon l'une quelconque des revendications 1 à 7,
**caractérisé en ce que** le support d'impact latéral (8) est réalisé sous la forme d'un profilé extrudé oblong.

9. Dispositif selon la revendication 8,
**caractérisé en ce que** le profilé oblong consiste dans sa totalité ou partiellement dans le matériau transducteur, de préférence dans un métal ou un alliage à mémoire de forme.

10. Dispositif selon la revendication 8 ou 9,
**caractérisé en ce que** le profilé extrudé prévoit chaque fois sur ses zones d'extrémité opposées des zones en matériau transducteur.

11. Dispositif selon l'une quelconque des revendications 1 à 10,
**caractérisé en ce que** le support d'impact latéral (8) présente une extension longitudinale, le long de laquelle le support d'impact latéral (8) présente une courbure dirigée vers l'introduction d'énergie due à la collision avec un premier rayon de courbure et
**en ce que** le support d'impact latéral (8) subit directement avant et pendant une situation d'impact une modification de forme, de sorte que le support d'impact latéral (8) adopte une courbure avec un deuxième rayon de courbure réglable de façon contrôlée, qui est inférieur au premier rayon de courbure.

12. Dispositif selon la revendication 11,
**caractérisé en ce que** dans l'état du deuxième rayon de courbure, comparé avec l'état dans lequel le support d'impact latéral (8) présente le premier rayon de courbure, le support d'impact latéral (8) adopte une position physique avancée à l'encontre de la direction à partir de laquelle l'introduction d'énergie agit sur la portière de véhicule (1) et créé ainsi une zone déformable supplémentaire.

13. Dispositif selon la revendication 11 ou 12,
**caractérisé en ce que** la modification de forme du support d'impact latéral (8) est susceptible d'être provoquée par un refoulement contrôlé du support d'impact latéral (8), par voie d'une saisie bilatérale des extrémités du support d'impact latéral (8) au moyen d'actionneurs prévus dans les zones d'appui stables, et/ou **en ce que** la modification de forme du support d'impact latéral (8) est susceptible d'être provoquée par voie d'une modification intrinsèque de structure, activable de façon contrôlée du support d'impact latéral (8) consistant au moins partiellement en matériau transducteur.

14. Dispositif selon l'une quelconque des revendications 1 à 13,
**caractérisé en ce que** les zones d'appui prévoient chaque fois un actionneur avec une structure intelligente, **en ce qu'**avant ou pendant une situation d'impact, chaque fois les structures intelligentes entrent en liaison active dans les zones d'appui avec le support d'impact latéral (8) et entrent avec le support d'impact latéral (8) en liaison par aboutage par complémentarité de force et/ou de forme.

15. Dispositif selon l'une quelconque des revendications 1 à 14,
**caractérisé en ce que** la structure intelligente fonctionne comme une structure à autoréglage sur la base de l'adaptronique.

16. Dispositif selon l'une quelconque des revendications 1 à 14,
**caractérisé en ce que** la structure intelligent fonctionne comme une structure à autoréglage sur la base de la mécatronique.
